# EUROPÄISCHE PATENTSCHRIFT

(11) **EP 2 203 821 B1**
(45) Veröffentlichungstag und Bekanntmachung des Hinweises auf die Patenterteilung: **02.03.2011**
(21) Anmeldenummer: 08801833.8
(22) Anmeldetag: 04.09.2008
(51) Int. Cl.: G06F 11/16, H04L 29/12, H04L 12/40, G05B 19/042

(54) **VERFAHREN ZUR SICHEREN DATENÜBERTRAGUNG UND GERÄT**
SECURE DATA TRANSMISSION METHOD AND APPARATUS
PROCÉDÉ DE TRANSMISSION SÉCURISÉE DE DONNÉES ET APPAREIL APPROPRIÉ

(30) Priorität: 13.09.2007 DE 102007043769
(43) Veröffentlichungstag der Anmeldung: 07.07.2010
(73) Patentinhaber: SEW-EURODRIVE GmbH & Co. KG, 76646 Bruchsal (DE)
(72) Erfinder: DUNKER, Raphael, 76703 Kraichtal (DE)
(86) Internationale Anmeldenummer: PCT/EP2008/007226
(87) Internationale Veröffentlichungsnummer: WO 2009/036891

(56) Entgegenhaltungen:
- EP-A- 0 905 594
- WO-A-2007/051595
- WO-A-2007/057445
- DE-A1- 10 038 860
- DE-A1- 10 206 657

## Beschreibung

Die Erfindung betrifft ein Verfahren zur sicheren Datenübertragung und ein Gerät, insbesondere ein Feldgerät oder einen Frequenzumrichter.

Aus der US 6 292 764 B1 ist eine abstimmbare Architektur für einen Geräteadapter bekannt, bei der ein automatisiertes System zur Herstellung einer logischen Darstellung eines Adapters für den Anschluss eines Geräts an einen Bus bereitgestellt wird, wobei ein konfigurierbares Makro eine Mehrzahl verschiedenartiger logischer Darstellungen des Adapters liefert.

AS-Interface als ein bit-orientierter Feldbus auf der untersten Ebene der Automatisierungspyramide ist bekannt aus:
- der Publikation R. Becker (Hrsg.): AS-Interface, die Lösung in der Automation, Gelnhausen (2002): ASlnternational Association, insbesondere Kapitel 3.2,
- dem Internet-Nachschlagewerk de.wikipedia.org,
- der DE 197 43 981 A1,
- der Norm EN 50295,
- der Internetseite http://www.as-interface.com/whatisasi.asp,
- der Präsentation "The AS-Interface Innovation Step 3.0" der AS-International Association vom 28.06.2005 und
- der Präsentation "AS-Interface" http://www.emg.ing.tu-bs.de/pdf/IKF/AS-i_SS04.pdf.
Dieses Bussystem ist optimiert für den Anschluss von einfachen Sensoren, Aktuatoren und Feldgeräten, die nur wenige Informationsbits mit der Steuerung austauschen. In einem Datentelegramm von AS-Interface sind daher nur 4 Informationsbits vom Master zum Slave und wieder zurück übertragbar.

Moderne Feldgeräte, wie sie insbesondere in Anlagen mit dezentraler Steuerungstechnik Verwendung finden, benötigen aber oftmals zahlreiche Parameter, die zur Optimierung der Feldgerätefunktion variabel einstellbar sind.

Moderne Feldgeräte können darüber hinaus oftmals Diagnose- und Serviceinformationen sammeln, die eine schnelle Problembeseitigung im Störungsfall unterstützen. Hierzu zählen elektronisch übermittelbare Daten nicht nur über das Produkt, wie Hersteller, Typenbezeichnung, Produktionsdatum, Firmware-Stand, sondern auch über den Betrieb, wie Betriebsstunden, Anzahl der Start-/Stop-Vorgänge, Überlastzustände und dergleichen mehr, **aber auch zusätzliche Daten zur Gewährleistung sicherheitsgerichteter Anforderungen.**

Andere Feldgeräte, etwa zum Bedienen und Beobachten, weisen z.B. eine einfache Anzeige auf, auf der Messdaten ausgegeben werden und ein Tastenfeld, über das Kommandos an die Steuerung eingebbar sind. Auch hier sind verschiedene byte-orientierte und bit-orientierte Funktionen logisch einander zugeordnet, wobei erstere für die Anzeige und letzte für die Tasten zum Einsatz kommen.

Um diesem Umstand Rechnung zu tragen, sind in der Spezifikation Version 3.0 Slave-Profile eingeführt worden, die sowohl über bit-orientierte als auch über byte-orientierte Datenaustauschmechanismen verfügen, siehe beispielsweise die zitierte Publikation AS-Interface, die Lösung in der Automation. Hier sei beispielhaft das Profil S-7.A.5 genannt. Bei diesem Profil werden je 2 Bit für einen seriellen Datenaustausch verwendet, es bleiben daher nur 1 oder 2 Bits für den schnellen bit-orientierten Datenaustausch übrig. Dies wiederum ist für viele Anwendungen - z.B. in der Antriebstechnik - zu wenig.

Dokument DE 100 38 860 A1 offenbart ein ASI (Actuator-Sensor-Interface)-System, das die Informationen zwischen einem Master und den verschiedenen Slaves seriell überträgt. In jedem Abfragezyklus werden Informationen seriell vom Master zu jedem Slave und zurück übertragen. Über die am Anfang des Masteraufrufs stehenden Adressbits wird jedem ASI-Slave mitgeteilt, ob die nachfolgende Information für ihn oder für einen anderen ASI-Slave bestimmt ist. Jedem ASI-Slave ist also eine Adresse zugeordnet, wobei die Adresse 0 eine Sonderfunktion hat. Sie wird üblicherweise bei der Herstellung als Defaultwert benutzt, d. h. herstellungsmässig ist den ASI-Slaves die Adresse 0 zugewiesen. Wenn dann beispielsweise ein defekter ASI-Slave ausgetauscht wird, wird im neuen ASI-Slave die Adresse 0 durch die Adresse des ausgefallenen ASI-Slaves ersetzt, was durch ein entsprechendes Kommando des ASI-Masters an den neuen ASI-Slave ausgeführt werden kann.

Der Erfindung liegt die Aufgabe zugrunde, den Datenaustausch bei einem Bussystem in einfacher und fehlerarmer Weise weiterzubilden.

Erfindungsgemäß wird die Aufgabe **bei dem Verfahren zur sicheren Datenübertragung** nach den in Anspruch 1 und bei dem Gerät nach den in Anspruch 13 vorgegebenen Merkmalen gelöst.

**Das erfindungsgemäße Verfahren ist vorteilhaft einsetzbar bei einem als Busteilnehmer vorgesehenem Gerät, welches** mittels eines Anschlusses mit einem Bus, insbesondere mit einem elektrischen Kabel, einer Stromschiene oder über eine Antenne mit Luft, verbunden ist, wobei Mittel zum Bereitstellen von zwei oder mehr Busteilnehmern umfasst sind und Mittel zum Zuordnen der über den Anschluss einströmenden und/oder ausgetauschten Daten an die zwei oder mehr Busteilnehmer umfasst sind. Derartige als Busteilnehmer vorgesehene Geräte werden auch als Feldgeräte bezeichnet. Vorzugsweise ist der Busteilnehmer zur Teilnahme an verschiedenartigen, aufeinander folgenden Buszyklen oder zur Kommunikation über verschiedene, getrennte Kommunikationskanäle ausgebildet. Vorteilig ist hierbei, dass über einen Anschluss zwei oder mehr Busteilnehmer an einen Bus anschließbar sind, was die Verkabelung vereinfacht. Auch können vorteilhaft durch die Bereitstellung mehrerer Busteilnehmer einerseits schnelle, bit-orientierte Daten und andererseits langsame, byte-orientierte, komplexe Daten ausgetauscht werden oder eine redundante Datenübertragung realisiert werden. Somit ist der Datenaustausch zwischen Master und Slave in einem Feldbus-System derart weitergebildet, dass je nach Anforderung verschiedene Datenaustauschmechanismen auf einfache und fehlerarme Weise einsetzbar sind. Von Vorteil ist weiter, dass ein Feldgerät eine Gruppe von Slaves enthält und somit über verschiedene Datenaustauschmechanismen unterschiedliche Datentypen oder zur Fehlerfeststellung mehrere Kopien einer jeden Daten- oder Informationseinheit mit einem Master austauschen kann.

**Eine vorteilhafte Ausgestaltung des an einem Bus angeschlossenen Geräts kann vorsehen, dass** dieses in einem ersten Modus einen logischen Slave, insbesondere Busteilnehmer, realisiert, und in einem zweiten Modus mindestens zwei logische Slaves, insbesondere Busteilnehmer, realisiert. Somit wird vorteilhaft bewirkt, dass je nach Anforderungen, beispielsweise an den Datenaustausch, zwischen verschiedenen Modi gewechselt werden kann. Insbesondere ist somit beispielsweise für eine Initialisierung des Geräts oder die Integration in das Feldbussystem ein einfach handhabbarer Modus wählbar, während für einen komplexen Datenaustausch ein komplexer Modus mit mehreren Busteilnehmern wählbar ist.

Bei einer weiteren vorteilhaften Ausgestaltung **des Geräts** ist im ersten Modus genau ein logischer Slave, insbesondere Busteilnehmer, realisiert. Von Vorteil ist dabei, dass die Inbetriebnahme, insbesondere Anmeldung im Feldbus-System oder Adresszuweisung, einfach vornehmbar ist.

Bei einer weiteren vorteilhaften Ausgestaltung **des Geräts** ist der Bus ein Feldbus, insbesondere CAN, CAN-Open, DeviceNet, Profibus, INTERBUS, AS-interface, Ethernet, Wireless-LAN, EIB, LCN. Von Vorteil ist dabei, dass der Busteilnehmer an einen standardisierten Bus anschließbar ist. Somit ist die erfindungsgemäße Vorrichtung modular in handelsüblichen Anlagen einsetzbar, insbesondere in Anlagen mit dezentraler Technik.

Die Erfindung ist besonders vorteilhaft einsetzbar bei Bussystemen, die wenigsten einen Master und mehrere Slaves umfassen, wobei der Master an die Slaves Adressen vergibt.

Bei einer weiteren vorteilhaften Ausgestaltung **des Geräts** ist der erste Modus ein Standardadressiermodus, bei einer weiteren vorteilhaften Ausgestaltung ist der zweite Modus ein erweiterter Adressiermodus. Von Vorteil ist dabei, dass, insbesondere bei Anschluss an einen AS-interface-Bus, im ersten Modus eine Adresse zuweisbar ist, die im zweiten Modus für eine Mehrzahl von Busteilnehmern beziehungsweise logischen Slaves verwendbar ist, da im erweiterten Adressiermodus mit einer Adresse in den unterschiedlichen Zyklen unterschiedliche Slaves ansprechbar sind.

Bei einer weiteren vorteilhaften Ausgestaltung umfasst das Gerät eine Umschaltlogik, die bei einem Wechsel von einer Standardadresse, insbesondere von einer Auslieferungsadresse oder von Adresse "0", auf einen anderen Adressen-Wert das Gerät vom ersten in den zweiten Modus versetzt. Mit der Standardadresse wird in dieser Schrift generell eine Adresse verstanden, mit welcher der Busteilnehmer im Auslieferungszustand, also vor Gebrauch im Bussystem, ausgerüstet ist. Oft wird hierzu die Adresse "0" verwendet, weshalb im Folgenden diese Bezeichnung der Einfachheit halber verwendet wird. Es sind jedoch auch andere Adressen als Standardadressen verwendbar. Wichtig ist allein, dass die Standardadresse von einem Master als solche durch die Konventionen des Protokolls erkennbar ist und die Erkennung einer Standardadresse die Ausführung eines Adressierungsverfahrens auslöst. Von Vorteil ist dabei, dass durch Standardvorgänge auf dem Bus ein Wechsel der Modi bewirkbar ist. Somit ist eine Erweiterung der Menge der über den Bus vermittelten Befehle und Kommandos vermeidbar. Bei einer weiteren vorteilhaften Ausgestaltung arbeitet das Gerät bei Zuweisung der Adresse "0" im ersten Modus und bei Zuweisung einer Adresse ungleich "0" im zweiten Modus. Von Vorteil ist dabei, dass ein ohnehin notwendiger Vorgang, nämlich die Adresszuweisung an ein durch Adresse "0" als an den Bus neu angeschlossen ausgewiesenes Gerät, für das Umschalten in den komplexeren Modus verwendbar ist. Somit ist die Adressvergabe in einem einfachen Verfahren durchführbar, durch einen Master oder mithilfe eines handelsüblichen Adressiergerätes. Besonders vorteilhaft bei der Wahl der Adresse "0" als funktionsunterscheidendes Merkmal ist, dass AS-interface-Slave bei Auslieferung diese Adresse belegen. Somit stellt sich das erfindungsgemäße Gerät bei Integration in ein AS-interface-Netzwerk bis zur Adressierung gegenüber dem Master als Standardslave dar. Für den Anwender besteht also vorteilhaft kein Unterschied zum Adressieren eines normalen Slaves, insbesondere gegebenenfalls eines AS-interface-Slaves. Nach Adressierung ist unmittelbar der zweite Modus bereitgestellt, der für den Hauptbetrieb des Feldgeräts vorgesehen ist. Weiter ist vorteilhaft die zugewiesene Adresse im zweiten Modus im erweiterten Adressiermodus, wie beispielsweise in der DE 102 06 657 A1 beschrieben, verwendbar. Es ist somit lediglich eine Adressvergabe für eine Mehrzahl von Slaves oder Busteilnehmern nötig. Es lassen sich deshalb vorteilhaft Doppeladressierungen vermeiden.

Bei einer weiteren vorteilhaften Ausgestaltung **des Geräts** weisen die mindestens zwei logischen Slaves voneinander verschiedene Profile auf. Somit sind die realisierten Slaves für unterschiedliche Datenübertragungsmechanismen einsetzbar. Beispielsweise sind bit-orientierte Funktionen an einen Slave übertragbar und byte-orientierte Funktionen an einen weiteren Slave.

Weitere vorteilhafte Merkmale des Geräts zum Anschluss an einen Bus können sein, dass das Gerät einen Rechner umfasst, wobei im Rechner die state machine mindestens zweier Busteilnehmer abgebildet ist. Von Vorteil ist dabei, dass zwei oder mehr Busteilnehmer und/oder logische Slaves realisierbar sind.

Bei einer weiteren vorteilhaften Ausgestaltung umfasst das Gerät einen Slave-IC und den mit diesem verbundenen Rechner, insbesondere Mikroprozessor mit Speicher, wobei der Slave-IC im transparenten Modus verwendbar ist. Von Vorteil ist dabei, dass eine Kommunikation zwischen Bus und Mikroprozessor und eine Realisierung mehrerer Slaves einfach und kostengünstig ermöglicht ist.

Bei einer weiteren vorteilhaften Ausgestaltung **des Geräts** ist der Busteilnehmer als AS-interface-Slave oder anderer Feldbus-Slave ausgebildet. Von Vorteil ist dabei, dass standardisierte Bus-Systeme einsetzbar sind, insbesondere bei Verwendung eines AS-interface-Busses.

**Das erfindungsgemäße Verfahren ist vorteilhaft kombinierbar mit einem** Verfahren zur Adressierung eines als Busteilnehmer vorgesehenen Geräts, **bei welchem** zwei logische Slaves umfasst sind,
wobei
- das Gerät vor der Adressierung mit einer Standardadresse, insbesondere Adresse "0", versehen wird und in einem ersten Modus, insbesondere Standardadressiermodus, betrieben wird,

- dem Gerät eine andere Adresse zugewiesen wird,
- und dann das Gerät nach Adresszuweisung mindestens zwei logische Slaves realisiert.

Von Vorteil ist dabei, dass die Adressierung eines derartigen Geräts mit jedem bereits auf dem Markt befindlichen Adressiergerät durchführbar ist. Von Vorteil ist weiterhin, dass die Adresse "0" die Standardadresse bei Auslieferung oder Neuanmeldung im Bussystem eines Busteilnehmers darstellt und standardmäßig eine Adresszuweisung durch einen Master nach sich zieht. Insbesondere muss der Master oder alternativ der Anwender eines solchen Geräts nur einen Adressiervorgang für die mindestens zwei logischen Slaves durchführen.

**Besonders günstig ist es dabei,** wenn die Slaves im erweiterten Adressiermodus mit der zugewiesenen Adresse alternierend jeweils in aufeinander folgenden Zyklen als A-Adresse beziehungsweise B-Adresse angesprochen werden. Hierbei ist vorteilhaft, dass im Slave im Standardadressiermodus der gleiche Adressraum belegbar ist wie in den mindestens zwei logischen Slaves beispielsweise im erweiterten Adressiermodus. Der Adressvorgang ist somit vorteilhaft durchführbar, ohne dass die Gefahr der Doppeladressierung besteht. Das erfindungsgemäße Verfahren ist vorteilhaft mit einem Umrichter ausführbar, bei welchem ein Gerät zum Anschluss an einen Bus integriert ist. Von Vorteil ist dabei, dass im Umrichter Mittel zur Kommunikation mit einem Bussystem vorsehbar sind. Somit ist der Umrichter vorteilhaft in Anlagen mit dezentraler Technik einsetzbar.

Bei einer weiteren vorteilhaften Ausgestaltung des Umrichters ist der Mikroprozessor des Geräts zum Anschluss an einen Bus in die Steuerung des Umrichters, insbesondere in die Ansteuerung der Leistungselektronik des Umrichters, integriert. Von Vorteil ist dabei, dass die ohnehin in der Steuerung des Umrichters vorhandene Rechenkapazität nutzbar ist für die Realisierung der logischen Slaves. Dies bewirkt vorteilhaft eine kompakte Bauform mit wenigen Komponenten.

Bei einer weiteren vorteilhaften Ausgestaltung des Umrichters sind Anschlussmittel für den Anschluss von Aktoren und/oder Sensoren und/oder einem Bus, beispielsweise MOVILINK^{®}, und/oder Schaltausgänge umfasst, wobei diese Anschlussmittel und/oder Schaltausgänge vom Bus ansteuerbar beziehungsweise auslesbar sind. Von Vorteil ist dabei, dass der Umrichter mit den integrierten Mitteln zusätzlich zu seiner namensgebenden Funktion als Slave zur Abarbeitung einfachster Funktionen und auch als Knoten im Bus-Netzwerk einsetzbar ist.

Wichtige Merkmale der Erfindung eines Verfahrens zur sicheren Datenübertragung, wobei ein als Busteilnehmer vorgesehenes Gerät vorgesehen ist, sind, dass
- das Gerät vor der Adressierung mit einer Standardadresse, insbesondere Adresse "0", versehen wird und in einem ersten Modus, insbesondere Standardadressiermodus, betrieben wird und einen logischen Slave realisiert,

- dem Gerät eine andere Adresse zugewiesen wird,
- und dann das Gerät nach Adresszuweisung mindestens zwei logische Slaves realisiert,
   wobei die in dem Gerät nach Adressierung realisierten mindestens zwei logischen Slaves zur redundanten, **insbesondere sicherheitsgerichteten,** Datenkommunikation mit dem Bus verwendet werden. Somit lassen sich Daten sicher über einen von außen gestörten Kommunikationskanal, beispielsweise einer Starkstromleitung und/oder einem Kanal mit zwischengeschaltetem induktiven oder kapazitiven Koppelelement, nutzen, ohne das eine aufwendige Neukonstruktion erforderlich ist.

Bei einer vorteilhaften Ausgestaltung tauschen die in dem Slave nach Adressierung realisierten mindestens zwei logischen Slaves über jeweils einen Kommunikationskanal Daten aus, wobei Daten redundant übertragen werden, insbesondere also in jedem Kommunikationskanal die Daten einen identischen Informationsgehalt aufweisen. Die Kommunikationskanäle können zeitlich parallel oder nacheinander betrieben werden.

Bei einer vorteilhaften Ausgestaltung ist mindestens einer der mindestens zwei logischen Slaves ein sicherheitsgerichteter Teilnehmer. Von Vorteil ist dabei, dass selbst das einem Teilnehmer übermittelte Signal auf Übertragungsfehler prüfbar ist. Vorzugsweise werden sicherheitsgerichtete Merkmale wie in Dietmar Reinert; Michael Schaefer (Hrsg.): Sichere Bussysteme für die Automation, Heidelberg: Hüthig, 2001, beschrieben realisiert.

Vorzugsweise kann vorgesehen sein, dass der sicherheitsgerichtete Teilnehmer zur Übermittelung seiner Nutzdaten, die beispielsweise auch die Adresse umfassen, diese Nutzdaten in einer Sicherheitsschicht Sicherheitsprozeduren zur Authentifizierung und/oder zur Generierung von Sicherungscodes wie z.B. CRC unterwirft. Somit werden an die Nutzdaten zusätzliche, sicherheitsrelevante Daten angehängt und die so verpackten Daten an nicht-sicherheitsgerichtete Transportschichten, insbesondere die Hardware des Bussystems, übergeben.

Bei Verwendung eines Codegenerators in einem sicherheitsgerichteten Slave, durch den beispielsweise ein dynamisiertes "frei"-Signal erzeugt wird, kann zur Reduzierung der Übertragungsfehlerrate vorgesehen sein, dass jeder logische Slave an einen separaten Codegenerator angeschlossen ist und/oder dass für jeden logischen Slave nach einer separaten Codetabelle codiert wird.

Bei einer vorteilhaften Ausgestaltung wird ein Bussystem mit mindestens zwei Zyklen betrieben, wobei die Busteilnehmer als erfindungsgemäße Geräte mit zwei oder mehreren logischen Slaves ausgebildet sind und in einem ersten Zyklus Informationen gesendet werden, die in dem folgenden, zweiten Zyklus wiederholt werden. Jeder logische Slave stellt somit die Empfangs- oder Sendestelle eines Kommunikationskanals dar, wobei die Kommunikationskanäle entsprechend der Abfolge der Zyklen nacheinander oder parallel aktiviert und genutzt werden. Von Vorteil ist dabei, dass sowohl der Aufbau des Busnetzwerks als auch die Adressierung als auch die Informationsübertragung so verlaufen, als ob ein einfacher Bus vorläge, und die Informationen der Datenkommunikation redundant übertragen werden. Ein Anwendungstechniker muss demnach beim Netzaufbau keine Besonderheiten beachten.

Beispielsweise kann es vorgesehen sein, dass die logischen Slaves zur Reduzierung von Übertragungsfehlern, die aufgrund von Wiederholungen von nicht mehr aktuellen Nachrichten zu falschen Zeit, von Nachrichtenverlust, von fehlerhaftem Einfügen von Nachrichten, von Veränderung der Abfolge von Nachrichten, von Verzögerung von Nachrichten und/oder von Verfälschungen von Nachrichten auftreten, ausgebildet sind.

In einer besonders einfach realisierbaren Ausgestaltung senden beide Slaves dieselbe Information, so dass bei fehlender Übereinstimmung ein Übertragungsfehler bzw. ein Kodierungsfehler erkennbar ist

Zur Erkennung von Übertragungsfehlern kann beispielsweise ein Slave zur Übertragung von laufenden Nummern, welche die Nachrichten des jeweils anderen Slave fortlaufend nummerieren, verwendet werden, oder zur Übertragung einer Zeitmarke, die den Zeitpunkt der Nachrichtenabsendungen des jeweils anderen Slave absolut oder relativ markieren. Hierdurch werden vorteilhaft Vertauschungen von Nachrichten und die Einfügung von Nachrichten erkennbar.

Alternativ oder zusätzlich kann vorgesehen sein, dass wenigstens ein Slave zur Übermittelung einer Zeiterwartung verwendet wird, welche die Gültigkeitsdauer einer Nachricht des jeweils anderen Slave charakterisiert. Bei Überschreitung des vorgegebenen Wertes bis zum Eingang beim Empfänger ist vorzugsweise vorgesehen, dass der Empfänger eine Fehlermeldung generiert und/oder die empfangene Nachricht ignoriert.

Zur Verminderung von Übertragungsfehler kann vorgesehen sein, dass ein Slave zum Absenden einer Rückmeldung über Erhalt und/oder Inhalt der Nachricht an den Master eingerichtet ist. Beispielsweise können die Daten wiederholt werden, die vom Master gesendet wurden, um diesem die Überprüfung des richtigen Empfangs zu ermöglichen.

Zusätzlich oder alternativ kann vorgesehen sein, dass ein logischer Slave zur Übermittlung einer Nachrichtenkennung eingerichtet ist, mit welchem der Sender, also der jeweils andere logische Slave, authentifizierbar ist. Von Vorteil ist dabei, dass am Master die Einfügung von Nachrichten durch nicht autorisierte Sender oder durch Störeinkopplungen erkennbar ist.

Die zweikanalige, redundante Buskommunikation in den alternierenden Zyklen ist außerdem dazu nutzbar, die gesendeten und empfangenen Nachrichten zwischen Slave und Master kreuzweise zu vergleichen und so auf Übertragungsfehler zu prüfen. Bei erkannter Abweichung muss ein Fehler der Übertragung, der Empfängereinheit und/oder der Sendereinheit vorliegen. Von Vorteil ist dabei, dass fehlerhafte Wiederholung, Verlust, fehlerhafte Einfügung, falsche Abfolge und Verfälschung von Nutzdaten erkennbar ist.

Bei einer vorteilhaften Ausgestaltung vergleicht jeder Busteilnehmer seine in dem ersten Zyklus empfangenen Informationen mit den im zweiten Zyklus empfangenen Informationen.

Bei einer vorteilhaften Ausgestaltung kann es vorgesehen sein, dass ein Bussystem mit mindestens zwei Zyklen betrieben wird und in einem Zyklus Nutzdaten und im jeweils vorangehenden oder folgenden Zyklus Prüfdaten übermittelt werden. Von Vorteil ist dabei, dass die in einem Zyklus, insbesondere von einem logischen Slave, übermittelten Daten im folgenden Zyklus oder durch Daten aus dem vorangehenden Zyklus verifizierbar sind, wobei nicht nur der Informationsgehalt, sondern andere Fehlerquellen überwachbar sind. Beispielsweise kann anhand einer laufenden Nummer der Nutzdaten eine Wiederholung, ein Verlust, eine Einfügung, auch durch unbefugte oder defekte Dritte, und eine falsche Abfolge erkannt werden. Durch eine Zeitmarke für den Sendezeitpunkt der Nutzdaten sind dagegen eine Wiederholung, eine falsche Abfolge und eine Verzögerung erkennbar. Eine Zeiterwartung für die Dauer der Gültigkeit der Nutzdaten ist zur Erkennung von Verzögerungen bei der Übertragung einsetzbar. Eine Empfangsbestätigung mit der Wiederholung einer zuvor erhaltenen Nachricht, insbesondere des Masters, ermöglicht die Detektion von Einfügungen, Verlusten oder Nachrichtenerfälschungen und verhindert die Kopplung von sicherheitsgerichteten mit nicht-sicherheitsgerichteten Nachrichten. Eine Kennung des Senders und/oder des Empfängers verhindert Einfügungen und die Kopplung von sicherheitsgerichteten mit nicht-sicherheitsgerichteten Nachrichten, beispielsweise mit von sonstigen Slaves im Bus ohne sicherheitsgerichtete Ausgestaltung abgegebenen Nachrichten. Diese Maßnahmen sind vorteilhaft mit Maßnahmen zur Datensicherung, beispielsweise durch Prüfsummen und dergleichen, kombinierbar.

Bei einer vorteilhaften Ausgestaltung führt der Busteilnehmer, **ein Busmaster und/oder ein Sicherheitsmonitor** eine Fehlerroutine aus, wenn die verglichene Information nicht übereinstimmt **und/oder wenn anhand der Prüfdaten ein Übertragungsfehler erkannt wird.** Eine solche Fehlerroutine ist beispielsweise eine Rückmeldung an einen Busmaster, worauf die betreffende Information noch einmal gesendet wird. Eine solche Fehlerroutine ist beispielsweise auch der Übergang in einen sicheren Modus, etwa die Weitergabe des Befehls sicherer Halt an einen Motor, wenn der Slave mit dem Motor verbunden ist. Werden mehr als zwei Kommunikationskanäle verwendet, so wird vorzugsweise dann eine Fehlerroutine ausgeführt, wenn nicht mit genügend Sicherheit das richtige Datensignal rekonstruiert werden kann. Beispielsweise kann die ausgetauschte Information so auf drei Kommunikationskanäle verteilt werden, dass bei Ausfall eines Kanals die vollständige Information aus zwei Kanälen gewonnen werden kann, etwa nach Art eines RAID- oder redundant array of independent disks-Systems. Unter einem Sicherheitsmonitor wird hierbei ein Gerät verstanden, welches den Nachrichtenaustausch über den Bus überwacht, ohne an der Kommunikation teilzunehmen, und welches bei Abweichungen von Festlegungen, die zur Umsetzung von Sicherheitskonzepten vorgesehen sind, eine sichere Abschaltung oder die Ausgabe einer Fehlermeldung oder eine sonstige, sicherheitsrelevante Aktion einleitet.

Zum Ausführen des erfindungsgemäßen Verfahrens kann ein Gerät vorgesehen sein, an welchem eine Umschaltlogik ausgebildet ist, die bei einem Wechsel von einer Standardadresse, insbesondere von einer Auslieferungsadresse oder von Adresse "0", auf einen anderen Adressen-Wert das Gerät von einem ersten in einen zweiten Betriebsmodus versetzt, wobei das Gerät im ersten Modus einen logischen Slave realisiert und das Gerät im zweiten Modus zwei logische Slaves realisiert.

Bei diesem Gerät kann vorteilhaft vorgesehen sein, dass das Gerät einen Slave-IC und den mit diesem verbundenen Rechner, insbesondere Mikroprozessor mit Speicher, umfasst, wobei der Slave-IC im transparenten Modus verwendbar ist, insbesondere wobei der Mikroprozessor des Geräts zum Anschluss an einen Bus in die Steuerung des Umrichters, insbesondere in die Ansteuerung der Leistungselektronik des Umrichters, integriert ist, und/oder der Rechner von einem Umrichter oder einer Steuerung umfasst ist, insbesondere der Rechner zur Steuerung und/oder Regelung von Aktoren, Elektromotoren oder dergleichen vorgesehen ist, insbesondere wobei das Gerät ein Umrichter ist, in welchen ein Gerät zum Anschluss an einen Bus integriert ist, und/oder Anschlussmittel für den Anschluss von Aktoren und/oder Sensoren und/oder einem Bus, beispielsweise MOVILINK^{®}-Bus, und/oder Schaltausgänge umfasst sind, wobei diese Anschlussmittel und/oder Schaltausgänge vom Bus ansteuerbar beziehungsweise auslesbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Feldgerät
- 2: AS-i-Leitung
- 3: Slave
- 3A: erster Slave
- 3B: zweiter Slave
- 4: Anschlussleitung
- 5: interne Leitung
- 6: Kontakt
- 7: interne Leitung
- 8: Anschluss
- 10: Slave-IC
- 11: Mikroprozessor
- 12, 13, 14: interne Datenleitung
- 30: Zustand im ersten Modus
- 31: RESET-Signal
- 32: Standardadressierungs-Signal
- 33: Zustand im zweiten Modus
- 34: weiterer Zustand im zweiten Modus
- 35: Buskommando, Sensordatum oder Aktorbefehl
- 50: Umrichter
- 52: Motor
- 53: Anschlusspunkt
- 54: Feldbus
- 55: Anschlussleitung
- 56: Steuerung
- 58: Slave
- 60: Leistungselektronik
- 62: Aktor
- 64, 66: Sensor
- 68: Bus
- 70: Applikationsmodul
- 71: virtueller Slave
- 72: Slave
- 73: Slave
- 74: Slave
- 75: virtueller Slave
- 76: virtueller Slave
- 77: Systembus
- 78: Energiebus

Die Erfindung wird nun anhand von Abbildungen näher erläutert:
Es zeigt:
   - Figur 1 das Funktionsschaubild eines erfindungsgemäßes Feldgeräts nach Zuweisung der Adresse "0",
   - Figur 2 das Funktionsschaubild eines erfindungsgemäßes Feldgeräts nach Zuweisung einer Adresse verschieden von "0",
   - Figur 3 schematisch ein erfindungsgemäßes Feldgerät,
   - Figur 4 die state machine eines erfindungsgemäßen Mikroprozessors,
   - Figur 5 einen Umrichter mit Motor als erfindungsgemäßes Feldgerät.

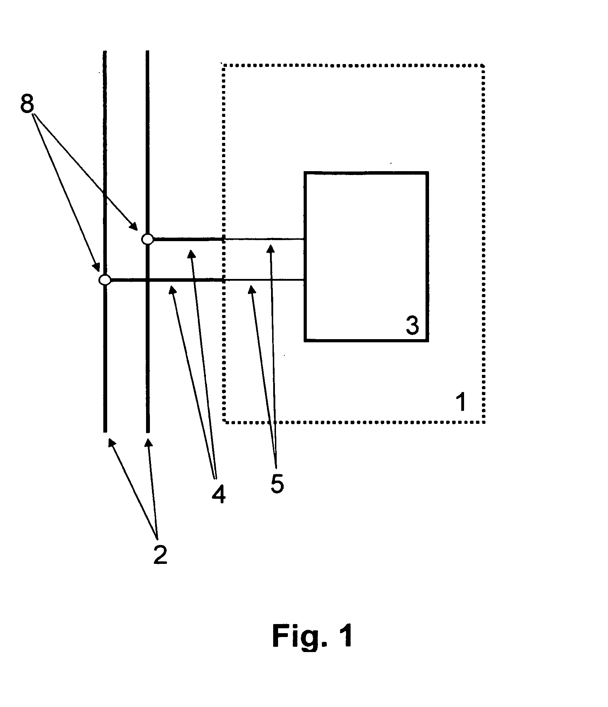

Figur 1 zeigt das Funktionsschaubild eines erfindungsgemäßen Feldgeräts 1, wenn diesem die Adresse "0" zugewiesen wurde. Dies ist zum Beispiel der Fall, wenn das Feldgerät 1 im Auslieferungszustand neu oder nach einer Wartung wieder im AS-interface-Netzwerk eingebaut wird.

Das Feldgerät 1 ist mit einer AS-interface-Leitung 2 über eine Anschlussleitung 4 und einen Anschluss 8 an einem Anschlusspunkt verbunden. Es nimmt über diese Anschlussleitung 4 am AS-interface-Netzwerk so teil, als wären die Anschlussleitungen 4 über innere Leitungen 5 mit einem Slave 3 verbunden, der ein Standardprofil, beispielsweise das Profil S-7.F.F, aufweist. Der Slave 3 und die inneren Leitungen 5 sind dabei virtuell, d.h. das Feldgerät 1 simuliert die dargestellte Funktion.

Ein ebenfalls an die AS-interface-Leitung angeschlossener Master kann nun das Feldgerät 1 anhand der Adresse "0" als neuen Teilnehmer erkennen und ihm in AS-interface-typischer Weise, wie es beispielsweise in der DE 197 43 981 A1 beschrieben wird, eine freie Adresse zuweisen. Diese Adresszuweisung ist alternativ mit einem handelsüblichen Adressiergerät durchführbar:

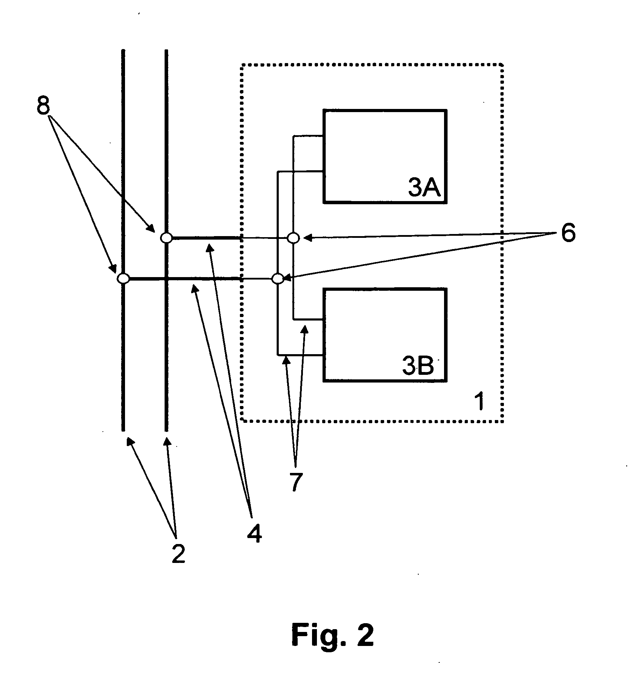

Figur 2 zeigt das Funktionsschaubild eines erfindungsgemäßen Feldgeräts 1, wenn diesem eine Adresse verschieden von "0" zugewiesen wurde. Dies kann zum Beispiel der Fall sein, wenn das Feldgerät 1 von einem Master als neuer Teilnehmer erkannt und mit einer freien Adresse belegt wurde.

Das Feldgerät 1 ist mit einer AS-interface-Leitung 2 über eine Anschlussleitung 4 an einem Anschluss 8 in einem Anschlusspunkt verbunden. Es nimmt über diese Anschlussleitung am AS-interface-Netzwerk im Unterschied zu dem in Figur 1 dargestellten Fall als Busteilnehmer des Bussystems so teil, als wären die Anschlussleitungen 4 über innere Leitungen 7, und eine innere Verzweigung 6 mit zwei Slaves 3A und 3B verbunden. Diese Slaves weisen vorteilhaft verschiedene Profile auf, beispielsweise Slave 3A das Profil S-7.A.7 für eine schnelle binäre und also bit-orientierte Ein- und Ausgabe und Slave 3B das Profil S-7.A.5 für zusätzliche digitale und also byte-orientierte Ein- und Ausgabe.

Das AS-interface-Netzwerk wird nun im erweiterten Adressiermodus betrieben, und der Slave 3A spricht auf die Adresse des Feldgeräts 1 im A-Zyklus an, während der Slave 3B auf die Adresse des Feldgeräts 1 im B-Zyklus anspricht.

Das Feldgerät 1 simuliert also den Anschluss zweier Slaves 3A und 3B an das AS-interface-Netzwerk, wobei Slave 3A die Adresse des Feldgeräts 1 als A-Adresse verwendet, während Slave 3B diese Adresse als B-Adresse benutzt. Aus einem logischen Slave bei Adresse "0" werden also zwei oder mehr logische Slaves mit beliebig vorgebbaren Profilen, wenn die Adresse ungleich "0" ist.

Somit sind zwei Kommunikationskanäle verwendbar, über die identische Information redundant übertragen werden kann, wobei ein Kommunikationskanal von Slave 3A, der andere Kommunikationskanal von Slave 3B ausgewertet oder mit Signalen beaufschlagt wird. Slave 3A und Slave 3B vergleichen ihre jeweils empfangenen Daten und führen eine Fehlerroutine aus, wenn Datenungleichheit festgestellt wird. Jeder Kommunikationskanal ist durch einen Buszyklus realisiert.

Bei einer Anwendung des beschriebenen Ausführungsbeispiels dienen die logischen Slaves zur Übertragung von 1 Bit Nutzinformation, welche die möglichen Bedeutungen "frei" für logisch 1 und "nicht frei" für logisch 0 haben und welche die sicherheitsgerichteten Schaltsignale eines Schutzschalters, beispielsweise eine Lichtgitters, eines NOT-AUS-Schalters oder Kontaktschalters, beschreiben.

Im Zustand "nicht frei", also beispielsweise im Zustand "NOT-AUS betätigt" oder "Lichtgitter durchbrochen", liegt an den vier Eingangsbits jedes logischen Slaves der Wert (0,0,0,0) statisch an. Im Zustand "frei", also beispielsweise im Zustand "NOT-AUS nicht betätigt" oder "Lichtgitter nicht durchbrochen", wird dagegen an den vier Eingangsbits mit jedem Zyklus ein Wert angelegt, der wenigstens eine 1 aufweist, wobei die Werte eine periodisch wiederholte Abfolge bilden, bei denen kein Wert innerhalb einer Periode einem anderen gleicht. Diese Abfolge von Werten ist dem Master bekannt, wobei für jeden logischen Slave 3A, 3B eine andere Abfolge definiert ist. Im einfachsten Fall wechseln die beiden logischen Slaves 3A, 3B im Gegentakt zwischen zwei Werten. Hier ist sogar ein Codegenerator verzichtbar.

Somit erkennt der Master den Zustand "nicht frei" genau dann, wenn beide logischen Slaves 3A, 3B in ihrem Zyklus jeweils (0,0,0,0) anlegen, ansonsten erkennt der Master den Zustand "nicht frei" und kann, wenn die "nicht frei"-Signale wenigstens eines logischen Slaves von der vorgegebenen Abfolge abweichen, sogar die fehlerhafte Übertagung feststellen.

Bei einem Ausführungsbeispiel wird für die Definition der beschriebenen Abfolge von Werten für den Zustand "nicht frei" ein Codegenerator verwendet, der auf eine Codierungstabelle zugreift. Für jeden logischen Slave wird hierbei eine separate Tabelle verwendet, wobei in einer Weiterbildung auch die Codegeneratoren getrennt ausgeführt sind. Durch die Verwendung von unterschiedlichen Codierungstabellen wird die Wahrscheinlichkeit, dass im Zustand "nicht frei", beispielsweise durch Störeinkopplungen oder Verfälschungen, der Zustand "frei" erreicht wird, weiter verringert.

Bei einem weiteren erfindungsgemäßen Ausführungsbeispiel simuliert das Feldgerät 1 den Anschluss von drei, vier oder mehr Slaves über die Anschlussleitung 4, wenn ihm nicht die Adresse "0" zugewiesen wurde. Für die Simulation von mehr als zwei Slaves werden dem Feldgerät mehr als eine Adresse zugewiesen, die in Analogie zu dem Beispiel von Figur 2 im erweiterten Adressierverfahren verwendbar sind, oder es wird ein Adressiermodus verwendet, der nach Art des erweiterten Adressiermodus drei, vier oder mehr verschiedene Zyklen aufweist.

In diesem Fall ist wieder jeder logische Slave einem Kommunikationskanal zugeordnet. Die Information wird nun so redundant aufgeteilt, dass der volle Informationsgehalt rekonstruierbar ist, selbst wenn ein Kommunikationskanal ausfällt oder gestört wird. Die logischen Slaves vergleichen ihr jeweiliges Empfangsergebnis untereinander und stellen im Fall einer Abweichung mindestens eines Kommunikationskanals von den anderen fest, ob sich mit einer Untermenge der Kommunikationskanäle, also der empfangenen Daten der einzelnen logischen Slaves, eine widerspruchsfreie Information zusammengesetzt werden kann. Ist dies der Fall, wird eine erste Fehlerroutine ausgeführt, die empfangene Information jedoch trotzdem ausgewertet. Ist dies nicht der Fall, wird eine zweite Fehlerroutine ausgeführt und in einen sicheren Betriebsmodus, beispielsweise in einen sicheren Halt, gewechselt. Werden mit der ersten Fehlerroutine Signale an einen Busmaster gegeben, so zählt dieser die eingegangenen Signale und wechselt in einen Modus reduzierter Übertragungsrate, falls ein Grenzwert überschritten wird.

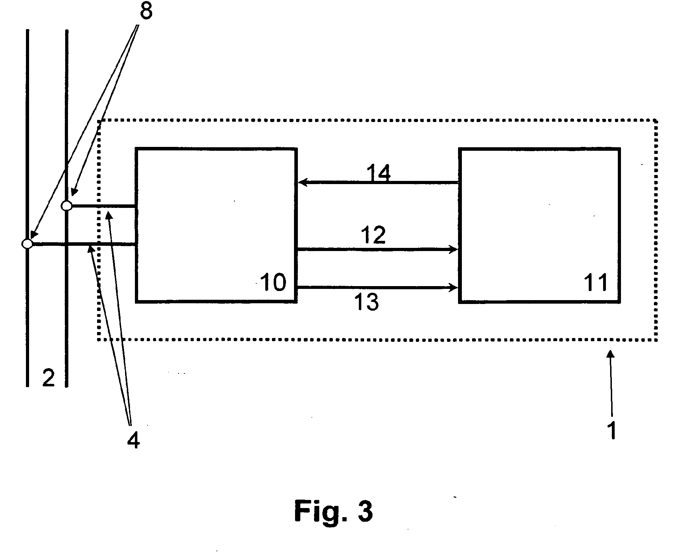

Figur 3 zeigt ein erfindungsgemäßes Ausführungsbeispiel eines Feldgeräts. Ein Feldgerät 1 ist über Anschlussleitungen 4 mit einer AS-interface-Leitung 2 verbunden und umfasst einen handelsüblichen Slave-IC 10, also integrierten Schaltkreis, und einen Mikroprozessor 11. Der Slave-IC 10 wird im transparenten Modus betrieben und gibt also die von der AS-interface-Leitung 2 über die Anschlussleitungen 4 bezogenen Daten über eine interne Datenleitung 12 weiter an den Mikroprozessor 11 und von diesem über eine weitere interne Datenleitung 14 empfangene Daten an die AS-Interface-Leitung 2. Zusätzlich bezieht dieser Mikroprozessor 11 vom Slave-IC 10 das clock-Signal über eine weitere interne Datenleitung 13. In der Firmware des Mikroprozessors 11 ist die state machine mindestens eines AS-interface-Slaves abgebildet, also der Endliche Automat, der alle möglichen Zustände des AS-interface-Slaves und die erlaubten Übergänge zwischen diesen Zuständen modelliert. Derartige state machines werden in A. Hunt und D. Thomas: State Machines, IEEE Software November/December 2002, S. 10-12 beschrieben. In dem Mikroprozessor 11 sind somit zwei oder mehr logische Slaves realisierbar, und der Mikroprozessor 11 kann je nach zugewiesener Adresse, die von einem Adressiergerät oder dem Master über den Slave-IC 10 übermittelt wird, eine vorbestimmte Zahl von logischen Slaves simulieren.

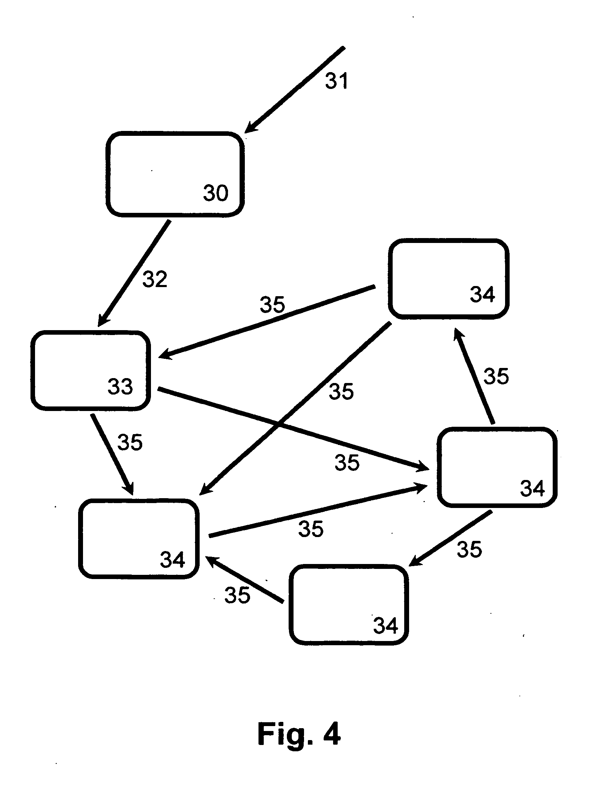

Figur 4 zeigt schematisch die state machine eines Mikroprozessors 11, wie er in Figur 3 einsetzbar ist. Nach einem RESET-Signal 31 oder im Auslieferungszustand befindet sich der Mikroprozessor 11 in einem ersten Modus 30, in dem er mittels Standardadressierungs-Signalen 32 vom AS-interface-Bus eine Adresse zugewiesen bekommt und in einen Zustand 33 eines zweiten Modus übergeht. Dieser Übergang ist durch eine Umschaltlogik bewirkbar.

Der zweite Modus umfasst diesen Zustand 33 und weitere Zustände 34, die mindestens die möglichen Zustände zweier logischer Slaves 3A, 3B umfassen. Insbesondere beschreibt also der Zustand 33 zwei logische Slaves, die im erweiterten Adressiermodus betreibbar sind, ein jeder in einem der beiden Zyklen und mit der durch das Standardadressierungs-Signal 32 zugewiesenen Adresse. Zwischen diesen Zuständen 33, 34 werden durch Buskommandos, Daten von an den Mikroprozessor angeschlossenen Sensoren oder Aktoren oder durch die Abgabe von Kommandos an Aktoren Übergänge 35 bewirkt, wie sie für die Realisierung der mindestens zwei logischen Slaves 3A, 3B nötig und typisch sind.

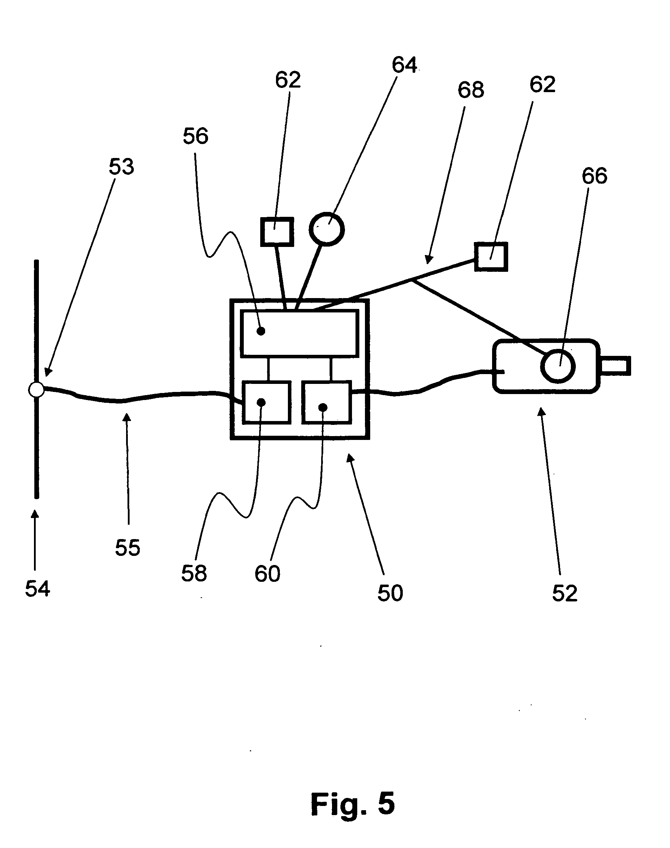

Figur 5 zeigt eine erfindungsgemäße Verwendung eines Feldgeräts aus Figur 1 bis 4. Das Feldgerät ist ein Umrichter 50, der an einen Elektromotor 52 angeschlossen ist und der diesen steuert oder regelt. Der Umrichter 50 ist weiterhin an einen Feldbus 54, beispielsweise einen AS-interface-Bus, angeschlossen, wobei genauer eine Anschlussleitung 55 einen vom Umrichter 50 umfassten Slave 58 über einen Anschlusspunkt 53 mit dem Feldbus 54 verbindet. Der Slave 58 ist somit im Umrichter 50 integriert; er wird im transparenten Modus betrieben. Ein Mikroprozessor, der als Steuerung 56 des Umrichters 50 ausgebildet ist, nimmt die vom Slave weitergeleiteten Daten gemäß der Anordnung in Figur 3 auf und verarbeitet sie anhand einer in ihm hinterlegten state machine nach Figur 4. Die Steuerung 56 dient gleichzeitig der für einen Umrichter funktionstypischen Ansteuerung oder Regelung des Motors 52, und zwar durch Steuerung einer mit letzterem verbundenen Leistungselektronik 60. Der Mikroprozessor 11 aus Figur 3 ist also vorteilhaft in die ohnehin notwendige und also vorhandene Steuerung 56 des Umrichters 50 integriert. An die Steuerung 56 sind direkt oder über einen weiteren Bus 68 Aktoren 62 und Sensoren 64, 66 angeschlossen, die gegebenenfalls im Motor 52 integriert sind, wie für Sensor 66 beispielhaft gezeigt. Der Umrichter 50 ist somit als ein Feldgerät ausgebildet, wie es für Anwendungen der dezentralen Technik vorteilhaft ist.

Insbesondere sind im Umrichter 50 Mittel integriert, die eine Verwendung des Umrichters 50 als Busteilnehmer ermöglichen. Die erfindungsgemäße Bereitstellung zweier logischer Slaves durch eine entsprechende state machine in der Steuerung 56 bewirkt besonders vorteilhaft, dass zwischen Feldbus 54 und Umrichter 50 einerseits binäre Daten zur Ansteuerung von Aktoren 62 oder Sensoren 64, 66 austauschbar sind und dass andererseits byte-orientierte Daten beispielsweise in Form von Parametern für den Umrichter 50 oder von Befehlen zum Betrieb des Motors 52 oder in Form von Informationen über den Zustand von Umrichter 50 oder Motor 52 übergebbar sind.

Diese Übergabe von Befehlen oder Parametern wird wie beschrieben mit dem erfindungsgemäßen Verfahren zur sicheren Datenübertragung durch das Versenden sicherheitsgerichteter Nachrichten über die zwei logischen Slaves durchgeführt.

Bei einem weiteren erfindungsgemäßen Ausführungsbeispiel ist statt des AS-interface-Buses ein anderer Feldbus, insbesondere CAN, CAN-Open, DeviceNet, Profibus, INTERBUS, Ethernet, real-time Ethernet, Wireless-LAN, EIB oder LCN.

## Patentansprüche

1. Verfahren zur sicheren Datenübertragung,
wobei ein als Busteilnehmer vorgesehenes Gerät vorgesehen ist,
- das Gerät vor der Adressierung mit einer Standardadresse, insbesondere Adresse "0", versehen wird und in einem ersten Modus, insbesondere Standardadressiermodus, betrieben wird und einen logischen Slave realisiert,
- dem Gerät eine andere Adresse zugewiesen wird,
- **dadurch gekennzeichnet, dass** dann das Gerät nach Adresszuweisung mindestens zwei logische Slaves realisiert,
wobei die in dem Gerät nach Adressierung realisierten mindestens zwei logischen Slaves zur redundanten, sicherheitsgerichteten Datenkommunikation und zur Übertragung von zusätzlichen Daten zur Gewährleistung sicherheitsgerichteter Anforderungen mit dem Bus verwendet werden,
wobei das Bussystem mit mindestens zwei Zyklen betrieben wird
und in einem Zyklus Nutzdaten und im jeweils vorangehenden oder folgenden Zyklus Prüfdaten übermittelt werden,
wobei
die Slaves in einem erweiterten Adressiermodus mit der zugewiesenen Adresse alternierend jeweils in aufeinander folgenden Zyklen als A-Adresse beziehungsweise B-Adresse angesprochen werden.

2. Verfahren nach Anspruch 1,
**dadurch gekennzeichnet, dass**
die in dem Slave nach Adressierung realisierten mindestens zwei logischen Slaves mit einem Busteilnehmer Daten redundant austauschen über den Bus.

3. Verfahren nach einem der Ansprüche 1 oder 2,
**dadurch gekennzeichnet, dass**
die in dem Slave nach Adressierung realisierten mindestens zwei logischen Slaves über jeweils einen Kommunikationskanal Daten austauschen, wobei Daten redundant übertragen werden, insbesondere wobei in jedem Kommunikationskanal die Daten einen identischen Informationsgehalt aufweisen.

4. Verfahren nach einem der Ansprüche 1 bis 3,
**dadurch gekennzeichnet, dass**
die mindestens zwei logischen Slaves voneinander verschiedene Profile aufweisen.

5. Verfahren nach einem der Ansprüche 1 bis 4,
**dadurch gekennzeichnet, dass**
mindestens einer der mindestens zwei logischen Slaves ein sicherheitsgerichteter Teilnehmer ist.

6. Verfahren nach einem der Ansprüche 1 bis 5,
**dadurch gekennzeichnet, dass**
durch die redundante Datenübertragung die Fehlerrate durch Wiederholung, Verlust, Einfügung, Vertauschung, Verfälschung und/oder Verzögerung von Busnachrichten vermindert wird.

7. Verfahren nach einem der Ansprüche 1 oder 6,
**dadurch gekennzeichnet, dass**
ein Bussystem mit mindestens zwei Zyklen betrieben wird
und in einem ersten Zyklus Informationen gesendet werden, die in dem folgenden, zweiten Zyklus wiederholt werden.

8. Verfahren nach einem der Ansprüche 1 bis 7,
**dadurch gekennzeichnet, dass**
jeder Busteilnehmer seine in dem ersten Zyklus empfangenen Informationen mit den im zweiten Zyklus empfangenen Informationen vergleicht.

9. Verfahren nach einem der Ansprüche 1 bis 8,
**dadurch gekennzeichnet, dass**
ein Bussystem mit mindestens zwei Zyklen betrieben wird
und in einem Zyklus Nutzdaten und im jeweils vorangehenden oder folgenden Zyklus Prüfdaten übermittelt werden, die wenigstens eine der folgenden Informationen aufweisen:
eine laufende Nummer der Nutzdaten, eine Zeitmarke für den Sendezeitpunkt der Nutzdaten, eine Zeiterwartung für die Dauer der Gültigkeit der Nutzdaten, eine Empfangsbestätigung mit der Wiederholung einer zuvor erhaltenen Nachricht, insbesondere des Masters, eine Kennung des Senders und/oder des Empfängers.

10. Verfahren nach einem der Ansprüche 1 bis 9,
**dadurch gekennzeichnet, dass**
der Busteilnehmer, ein Busmaster und/oder ein Sicherheitsmonitor eine Fehlerroutine ausführt, wenn die verglichene Information nicht übereinstimmt und/oder wenn anhand der Prüfdaten ein Übertragungsfehler erkannt wird.

11. Verfahren nach einem der Ansprüche 1 bis 10,
**dadurch gekennzeichnet, dass**
die Fehlerroutine die Ausgabe eines Befehls zum sicheren Halt an eine Antriebseinheit umfasst
und/oder
die Fehlerroutine die Ausgabe einer Fehlerrückmeldung an den Master umfasst.

12. Verfahren nach einem der Ansprüche 1 bis 11,
**dadurch gekennzeichnet, dass**
der Bus ein Feldbus ist, insbesondere einer der Bussysteme CAN, CAN-Open, DeviceNet, Profibus, INTERBUS, AS-interface, Ethernet, Wireless-LAN, EIB, LCN,
und/oder der Busteilnehmer als AS-interface-Slave oder anderer Feldbus-Slave betrieben wird.

13. Gerät zum Ausführen eines Verfahren nach einem der Ansprüche 1 bis 12,
**dadurch gekennzeichnet, dass**
an dem Gerät eine Umschaltlogik ausgebildet ist, die bei einem Wechsel von einer Standardadresse, insbesondere von einer Auslieferungsadresse oder von Adresse "0", auf einen anderen Adressen-Wert das Gerät von einem ersten in einen zweiten Betriebsmodus versetzt,
wobei das Gerät im ersten Modus einen logischen Slave (3) realisiert
und das Gerät im zweiten Modus zwei logische Slaves (3A, 3B) realisiert.

14. Gerät nach Anspruch 13,
**dadurch gekennzeichnet, dass**
das Gerät einen Slave-IC und den mit diesem verbundenen Rechner, insbesondere Mikroprozessor mit Speicher, umfasst, wobei der Slave-IC im transparenten Modus verwendbar ist,
insbesondere wobei der Mikroprozessor des Geräts zum Anschluss an einen Bus in die Steuerung des Umrichters, insbesondere in die Ansteuerung der Leistungselektronik des eines Umrichters, integriert ist.

15. Gerät nach einem der Ansprüche 13 oder 14,
**dadurch gekennzeichnet, dass**
der Rechner von einem Umrichter oder einer Steuerung umfasst ist, insbesondere der Rechner zur Steuerung und/oder Regelung von Aktoren, Elektromotoren oder dergleichen vorgesehen ist, insbesondere wobei
das Gerät ein Umrichter ist, in welchen ein Gerät zum Anschluss an einen Bus integriert ist.

16. Gerät nach einem der Ansprüche 13 bis 15,
**dadurch gekennzeichnet, dass**
Anschlussmittel für den Anschluss von Aktoren und/oder Sensoren und/oder einem Bus, beispielsweise MOVILINK^{®}-Bus, und/oder Schaltausgänge umfasst sind, wobei diese Anschlussmittel und/oder Schaltausgänge vom Bus ansteuerbar beziehungsweise auslesbar sind.

## Claims

1. A method for reliable data transmission,
wherein a device provided as a bus node is provided,
- before the addressing the device is provided with a standard address, in particular address "0", and is operated in a first mode, in particular standard addressing mode, and configures a local slave,
- the device is assigned a different address,
**characterised in that**
- then after assignment of the address the device configures at least two logical slaves,
the at least two logical slaves, configured in the device after addressing, being used for redundant, safety-related data communication and for the transmission of additional data in order to guarantee safety-related requirements with the bus,
the bus system being operated with at least two cycles
and payloads being transmitted in one cycle and test data in the preceding or following cycle in each case,
the slaves are addressed with the allocated address in an extended addressing mode with each being addressed in successive cycles alternately as an A address or as a B address.

2. A method according to Claim 1, **characterised in that** the at least two logical slaves configured in the slave, after addressing, redundantly exchange data with a bus node via the bus.

3. A method according to one of Claims 1 or 2, **characterised in that** the at least two logical slaves configured in the slave after addressing exchange data via one communication channel in each case, with data being redundantly transmitted, in
particular with the data having an identical information content in each communication channel.

4. A method according to one of Claims 1 to 3, **characterised in that** the at least two logical slaves have profiles which differ from each other.

5. A method according to one of Claims 1 to 4, **characterised in that** at least one of the at least two logical slaves is a safety-related node.

6. A method according to one of Claims 1 to 5, **characterised in that** the error rate due to repetition, loss, insertion, permutation, corruption and/or delay of bus communications is reduced by the redundant data transmission.

7. A method according to one of Claims 1 or 6, **characterised in that** a bus system with at least two cycles is operated
and in a first cycle information is transmitted which is repeated in the following, second, cycle.

8. A method according to one of Claims 1 to 7, **characterised in that** each bus node compares its information received in the first cycle with the information received in the second cycle.

9. A method according to one of Claims 1 to 8, **characterised in that** a bus system is operated with at least two cycles
and payloads are transmitted in one cycle and in the preceding or following cycle in each case test data having at least one of the following items of information:
a sequence number of the payloads, a timestamp for the time of transmission of the payloads, a time expectation for the duration of the validity of the payloads, an acknowledgement of receipt with the repetition of a previously received communication, in particular of the master, an identification of the transmitter and/or of the receiver.

10. A method according to one of Claims 1 to 9, **characterised in that** the bus node, a bus master and/or a safety monitor executes an error routine if the compared information does not match and/or if a transmission error is recognised using the test data.

11. A method according to one of Claims 1 to 10, **characterised in that** the error routine comprises the issuing of a command to safely stop to a drive unit
and/or
the error routine comprises the issuing of an error feedback to the master.

12. A method according to one of Claims 1 to 11, **characterised in that** the bus is a field bus, in particular one of the bus systems CAN, CAN-Open, DeviceNet, Profibus, INTERBUS, AS-interface, Ethernet, Wireless-LAN, EIS, LCN,
and/or the bus node is operated as an AS-interface slave or other field-bus slave.

13. A device for carrying out a method according to one of Claims 1 to 12, **characterised in that**
a switching logic is formed on the device, which logic, upon changing from a standard address, in particular from a delivery address or from address "0", to a different address value, switches the device from a first into a second operating mode,
the device in the first mode configuring a logical slave (3)
and the device in the second mode configuring two logical slaves (3A, 3B).

14. A device according to Claim 13, **characterised in that** the device comprises a slave IC and the computer connected thereto, in particular microprocessor with memory, the slave IC being able to be used in transparent mode,
in particular the microprocessor of the device being integrated, for connection to a bus, in the control of the converter, in particular in the driving means for the power electronics of a converter.

15. A device according to one of Claims 13 or 14, **characterised in that** the computer is comprised by a converter or a control, in particular the computer is provided for the control and/or regulation of actuators, electric motors or the like, in particular the device being a converter in which a device for connection to a bus is integrated.

16. A device according to one of Claims 13 to 15, **characterised in that** connection means for connecting actuators and/or sensors and/or a bus, for example MOVILINK^{®} bus, and/or switching outputs are comprised, these connection means and/or switching outputs being able to be controlled or read by the bus.

## Revendications

1. Procédé de transmission de données sécurisée,
dans lequel il est prévu un appareil conçu comme participant au bus,
- l'appareil est muni, avant l'adressage, d'une adresse standard, en particulier de l'adresse « 0 », et est exploité dans un premier mode, en particulier un mode d'adressage standard, et réalise un esclave logique,
- une autre adresse est affectée à l'appareil,
**caractérisé en ce que**
l'appareil réalise ensuite, après l'affectation d'adresse, au moins deux esclaves logiques, lesdits au moins deux esclaves logiques réalisés dans l'appareil après adressage étant utilisés pour la communication de données redondante relative à la sécurité et pour la transmission de données supplémentaires destinées à garantir des exigences relatives à la sécurité avec le bus,
le système de bus étant exploité avec au moins deux cycles
et des données utiles étant transmises dans un cycle et des données de contrôle dans le cycle précédent ou suivant,
les esclaves étant adressés, dans un mode d'adressage étendu, alternativement dans des cycles successifs avec l'adresse affectée sous la forme d'une adresse A, respectivement d'une adresse B.

2. Procédé selon la revendication 1,
**caractérisé en ce que**
lesdits au moins deux esclaves logiques réalisés dans l'esclave après adressage échangent des données de manière redondante avec un participant au bus via le bus.

3. Procédé selon la revendication 1 ou 2,
**caractérisé en ce que**
lesdits au moins deux esclaves logiques réalisés dans l'esclave après adressage échangent des données via un canal de communication respectif, les données étant échangées de manière redondante, en particulier les données présentant un contenu d'information identique dans chaque canal de communication.

4. Procédé selon une des revendications 1 à 3,
**caractérisé en ce que**
lesdits au moins deux esclaves logiques présentent des profils différents l'un de l'autre.

5. Procédé selon une des revendications 1 à 4,
**caractérisé en ce que**
au moins un desdits au moins deux esclaves logiques est un participant relatif à la sécurité.

6. Procédé selon une des revendications 1 à 5,
**caractérisé en ce que**
le taux d'erreurs par répétition, perte, insertion, permutation, altération et/ou retard de messages de bus est diminué par la transmission de données redondante.

7. Procédé selon une des revendications 1 à 6,
**caractérisé en ce que**
un système de bus est exploité avec au moins deux cycles,
et dans un premier cycle sont envoyées des informations qui sont répétées dans le deuxième cycle suivant.

8. Procédé selon une des revendications 1 à 7,
**caractérisé en ce que**
chaque participant au bus compare ses informations reçues dans le premier cycle avec les informations reçues dans le deuxième cycle.

9. Procédé selon une des revendications 1 à 8,
**caractérisé en ce que**
un système de bus est exploité avec au moins deux cycles,
et dans un cycle sont transmises des données utiles et dans le cycle précédent ou suivant des données de contrôle qui présentent au moins une des informations suivantes : un numéro courant des données utiles, une marque temporelle pour l'instant d'envoi des données utiles, une espérance de temps pour la durée de validité des données utiles, une confirmation de réception avec la répétition d'un message reçu auparavant, en particulier du maître, un identifiant de l'émetteur et/ou du destinataire.

10. Procédé selon une des revendications 1 à 9,
**caractérisé en ce que**
le participant au bus, un maître de bus et/ou un moniteur de sécurité exécute une routine d'erreur quand l'information comparée ne concorde pas et/ou qu'une erreur de transmission est détectée à l'aide des données de contrôle.

11. Procédé selon une des revendications 1 à 10,
**caractérisé en ce que**
la routine d'erreur comprend l'émission d'une instruction d'arrêt sécurisé à une unité d'entraînement
et/ou
la routine d'erreur comprend l'émission d'une notification d'erreur au maître.

12. Procédé selon une des revendications 1 à 11,
**caractérisé en ce que**
le bus est un bus de terrain, en particulier un des systèmes de bus CAN, CAN-Open, DeviceNet, Profibus, INTERBUS, AS-interface, Ethernet, Wireless-LAN, EIB, LCN, et/ou le participant au bus est exploité en tant qu'esclave AS-interface ou autre esclave de bus de terrain.

13. Appareil pour réaliser un procédé selon une des revendications 1 à 12,
**caractérisé en ce que**
sur l'appareil est réalisée une logique de commutation qui, lors d'un changement d'une adresse standard, en particulier d'une adresse de livraison ou de l'adresse « 0 », en une autre valeur d'adresse, fait passer l'appareil d'un premier dans un deuxième mode de fonctionnement,
l'appareil réalisant un esclave logique (3) dans le premier mode
et l'appareil réalisant deux esclaves logiques (3A, 3B) dans le deuxième mode.

14. Appareil selon la revendication 13,
**caractérisé en ce que**
l'appareil comprend un CI esclave et le processeur relié à celui-ci, en particulier un microprocesseur avec mémoire, le CI esclave étant utilisable en mode transparent,
le microprocesseur de l'appareil permettant la connexion à un bus étant en particulier intégré dans la commande du variateur de vitesse, en particulier dans la commande de l'électronique de puissance d'un variateur de vitesse.

15. Appareil selon une des revendications 13 ou 14,
**caractérisé en ce que**
le processeur est inclut dans un variateur de vitesse ou une commande, en particulier le processeur est prévu pour la commande et/ou la régulation d'actionneurs, de moteurs électriques ou analogues,
l'appareil étant en particulier un variateur de vitesse dans lequel est intégré un appareil permettant la connexion à un bus.

16. Appareil selon une des revendications 13 à 15,
**caractérisé en ce que**
des moyens de connexion pour la connexion d'actionneurs et/ou de capteurs et/ou d'un bus, par exemple d'un bus MOVILINK^{®}, et/ou des sorties logiques sont inclus, ces moyens de connexion et/ou sorties logiques pouvant être commandés, respectivement lus, par le bus.
